# FASCICULE DE BREVET EUROPEEN

(11) **EP 0 803 031 B1**
(45) Date de publication et mention de la délivrance du brevet: **06.05.1998**
(21) Numéro de dépôt: 95942741.0
(22) Date de dépôt: 13.12.1995
(51) Int. Cl.: F16D 65/16, B60T 11/04

(54) **FREIN A DISQUE MUNI D'UN DISPOSITIF D'ACTIONNEMENT MECANIQUE**
SCHEIBENBREMSE MIT MECHANISCHER BETÄTIGUNGSVORRICHTUNG
DISC BRAKE WITH A MECHANICAL ACTUATION DEVICE

(30) Priorité: 31.01.1995 FR 9501051
(43) Date de publication de la demande: 29.10.1997
(73) Titulaire: Bosch Systemes de Freinage, 93700 Drancy (FR)
(72) Inventeur: LE DEIT, Gérard, F-77181 Courtry (FR); HULLIGER, Claude, F-60520 Thiers-sur-Thève (FR); SIMON BACARDIT, Juan, E-08813 Barcelone (ES); CORTES GUASCH, Esteve, E-08304 Mataro-Barcelone (ES); SACRISTAN, Fernando, Bosch Sys. de Freinage, F-93700 Drancy (FR)
(74) Mandataire: Bentz, Jean-Paul
(86) Numéro de dépôt international: FR9501665
(87) Numéro de publication internationale: WO9623985

(56) Documents cités:
- EP-A- 0 579 178
- DE-U- 8 811 920

## Description

La présente invention concerne le domaine des freins à disque en général, du type de ceux qui sont utilisés pour assurer le freinage des véhicules automobiles.

De tels freins à disque comportent de façon connue au moins un piston coulissant dans un étrier lui-même coulissant sur un support fixe Le piston peut être actionné hydrauliquement pour un fonctionnement en frein de service, et mécaniquement pour un fonctionnement en frein de secours ou en frein de stationnement.

L'actionnement mécanique peut par exemple être assuré par un sous-ensemble mécanique comprenant deux plateaux sensiblement parallèles, un premier plateau étant susceptible d'être entraîné en rotation par un levier de commande autour d'un axe perpendiculaire à sa surface, un second plateau étant fixe en rotation et solidaire du piston, la face d'au moins un des plateaux étant formée avec des gorges inclinées recevant des billes pour transformer le mouvement de rotation du premier plateau en un mouvement de translation axiale du second plateau, le levier de commande étant formé avec une partie d'accrochage de l'extrémité d'un câble d'actionnement à gaine, la gaine du câble prenant appui sur une butée de gaine fixe par rapport à l'étrier.

Des freins à disque équipés de tels actionneurs mécaniques sont bien connus dans la technique, par exemple par le document FR-A-2 638 214. Ils présentent toutefois quelques inconvénients. En effet, la fabrication en série impose de prévoir des tolérances de fabrication pour les divers éléments composant le frein à disque et l'actionneur mécanique à plateaux.

Il en résulte que, lors de l'assemblage final du frein à disque, le levier d'actionnement mécanique se trouve, au repos, dans une position angulaire qui peut varier d'un frein à l'autre, par rapport à la butée de gaine fixe, dans une plage de valeurs non négligeable. On a pu par exemple noter des variations de plus ou moins 10 degrés.

Il s'ensuit donc que, lorsque le frein à disque est installé sur le véhicule, le débattement angulaire maximal du levier, entre sa position de repos et sa position extrême la plus proche de la butée fixe, est lui-même variable d'un frein à l'autre, et que, dans certains cas extrêmes, ce débattement angulaire maximal ne soit pas suffisant pour actionner mécaniquement de façon satisfaisante le frein à disque.

La présente invention a donc pour objet de proposer un frein à disque avec un dispositif d'actionnement mécanique à plateaux du type rappelé ci-dessus, dans lequel la distance entre la butée de gaine, fixe par rapport à l'étrier, et la partie d'accrochage de l'extrémité du câble d'actionnement à gaine, soit constante d'un frein à l'autre dans une fabrication en série, et quelle que soit la position initiale du levier compte tenu des tolérances de fabrication, en prévoyant des moyens simples à mettre en oeuvre et peu onéreux, de façon à être compatibles avec une telle fabrication en série.

Dans ce but, selon l'invention, la pièce de butée de gaine est formée sur un étrésillon dont la position angulaire autour de l'axe par rapport au levier est déterminée par la position angulaire au repos du levier par rapport à l'étrier, l'étrésillon comportant un bras formé avec une patte s'étendant perpendiculairement au bras et formant une première butée sur laquelle le levier vient en appui dans une première position, l'étrésillon étant formé avec une lumière oblongue dont le grand axe s'étend sensiblement selon un arc de cercle centré sur l'axe de rotation du levier, et étant immobilisé en rotation par rapport à l'étrier au moyen d'une vis traversant la lumière oblongue de l'étrésillon et coopérant avec un alésage taraudé pratiqué dans l'étrier.

Il en résulte alors que la course du câble d'actionnement, et par conséquent le débattement angulaire du levier de commande, pourra être constante d'un frein à l'autre, et ajustée à la valeur optimale pour le frein à disque ainsi équipé.

Selon un mode de réalisation avantageux, l'étrésillon comporte un bras formé avec une patte s'étendant perpendiculairement au bras et formant une première butée sur laquelle le levier vient en appui dans une première position.

De préférence, l'étrésillon est formé avec une lumière oblongue s'étendant sensiblement selon un arc de cercle centré sur l'axe de rotation du levier, et la lumière oblongue de l'étrésillon est traversée par une tige de vis solidaire de l'étrier, de sorte que l'étrésillon peut être immobilisé en rotation par un écrou vissé sur la tige de vis.

D'autres buts, caractéristiques et avantages de la présente invention ressortiront plus clairement de la description qui suit d'un exemple de réalisation donné à titre explicatif et nullement limitatif, en référence aux dessins annexés sur lesquels :
- la Figure 1 est une vue en coupe d'un frein à disque muni d'un dispositif d'actionnement mécanique;
- la Figure 2 est une vue en bout du dispositif d'actionnement mécanique selon la présente invention, en position de repos;
- la Figure 3 est une vue semblable à celle de la Figure 2, dans une position d'actionnement extrême;
- la Figure 4 est une vue selon la direction IV de la Figure 2;
- la Figure 5 est une vue selon la direction V de la Figure 3;
- la Figure 6 est une vue analogue à celle de la Figure 2, d'une variante de réalisation, et
- la Figure 7 est une vue en coupe selon la ligne VII-VII de la Figure 6.

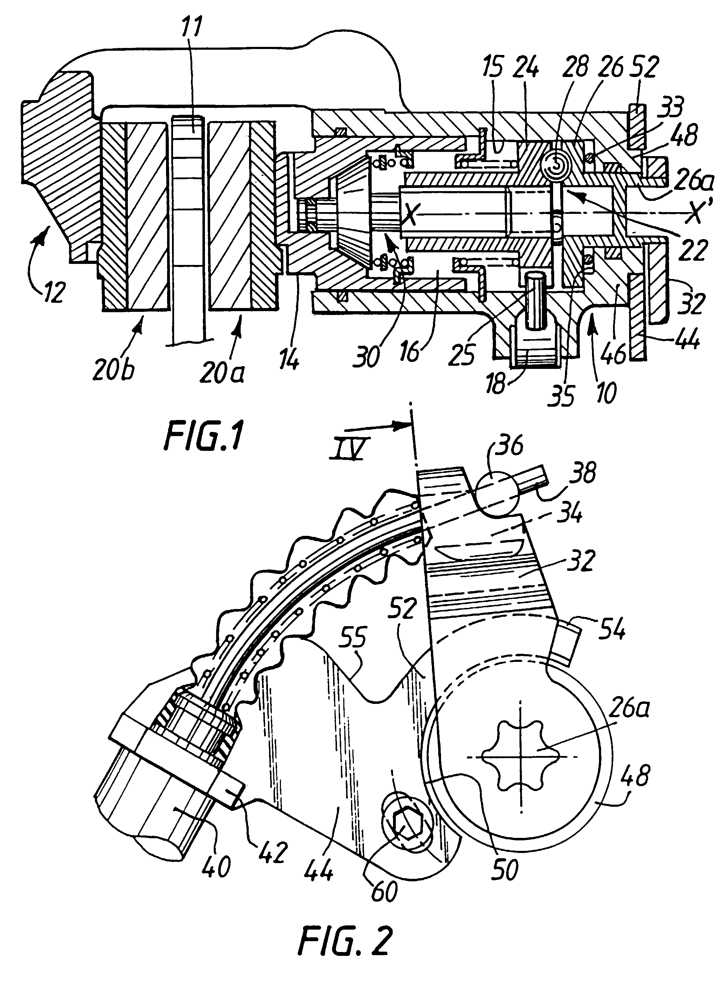

On reconnaît sur la Figure 1 un frein à disque, comprenant un corps 10 servant de logement pour le système d'actionnement du frein à disque, le corps 10 étant solidaire d'un étrier 12 monté coulissant sur une partie fixe (non représentée) du véhicule telle que le porte-fusée, pour freiner un disque tournant il solidaire d'une roue du véhicule (non représentée).

L'actionnement du frein à disque peut être hydraulique par l'intermédiaire d'un piston 14 monté coulissant de façon étanche dans un alésage 15 d'axe X-X' pratiqué dans le corps 10, le déplacement de ce piston étant commandé par la pression hydraulique dans une chambre 16 située derrière le piston 14, et reliée par une canalisation 18 à une source de pression telle qu'un maître-cylindre (non représenté).

Le piston 14 applique ainsi une garniture de friction 20a contre une face du disque tournant 11, tandis que par réaction l'étrier 12 applique une autre garniture de friction 20b contre l'autre face du disque tournant 11.

L'actionnement du frein à disque peut également être mécanique, au moyen d'un actionneur à plateaux, désigné dans son ensemble par la référence 22. L'actionneur 22 comporte deux plateaux, un plateau interne 24 et un plateau externe 26, entre lesquels sont disposées des billes 28.

Le plateau 24 est immobilisé en rotation, par exemple par un pion 25 solidaire du corps 10, par exemple inséré par la canalisation 18. Il est libre en translation dans le corps 10, et il est solidaire du piston 14, par l'intermédiaire d'un dispositif, désigné dans son ensemble par la référence 30, et destiné à assurer le rattrapage automatique des jeux résultant de l'usure progressive des garnitures de friction 20a et 20b.

Le plateau 26 est libre en rotation autour de l'axe X-X', et il comporte un pivot 26a, faisant saillie hors du corps 10, et solidaire d'un levier d'actionnement 32 s'étendant à l'extérieur du corps 10. Le plateau 26 est en appui, par l'intermédiaire d'un dispositif de roulement à billes ou à rouleaux 33, contre une surface 35 perpendiculaire à l'axe X-X'.

Au moins une des faces en regard des plateaux 24 et 26 est formée avec des gorges curvilignes autour de l'axe X-X', et dont le fond est incliné par rapport à un plan perpendiculaire à l'axe X-X', de sorte que la rotation du plateau 26, commandée par le levier 32, soit transformée en une translation du plateau 24, et corrélativement en un mouvement du piston 14 vers le disque 11.

Le levier 32 est de façon classique actionné par un câble à gaine. Comme on le voit bien sur les Figures 2 à 5, l'extrémité du levier 32 est repliée en forme de U, pour former une gorge 34 pour l'accrochage d'une virole 36 sertie à l'extrémité d'un câble de manoeuvre 38.

Le câble 38 constitue l'âme d'un câble à gaine, la gaine 40 de ce câble venant en butée sur une butée de gaine 42 formée sur un étrésillon 44. Dans l'exemple représenté, l'étrésillon 44 est intercalé entre le levier 32 et la partie postérieure 46 (Figure 1) de l'étrier 12. Cette partie 46 de l'étrier est formée avec un bossage cylindrique 48, centré sur l'axe X-X', autour duquel l'étrésillon 44 peut coulisser en pivotant autour de l'axe X-X' grâce à une découpe circulaire 50 de diamètre correspondant.

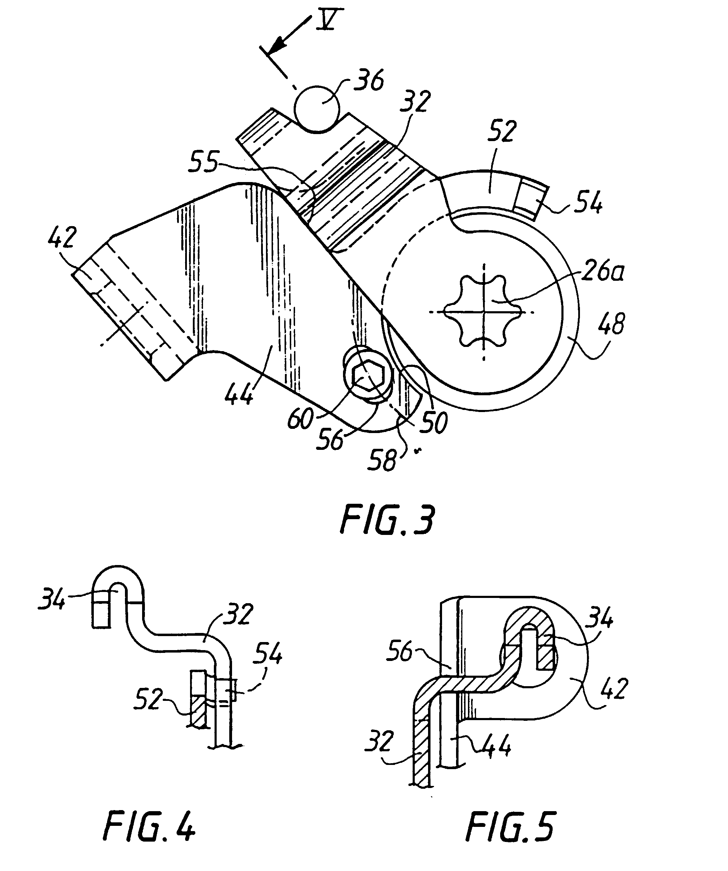

L'étrésillon 44 comporte un bras 52, s'étendant par exemple autour de la découpe circulaire 50, et à l'extrémité duquel est formée une patte 54, s'étendant dans une direction sensiblement perpendiculaire à celle du bras 52, et formant une première butée pour le levier 32 lorsque ce dernier est dans la position de repos représentée sur les Figures 2 et 4.

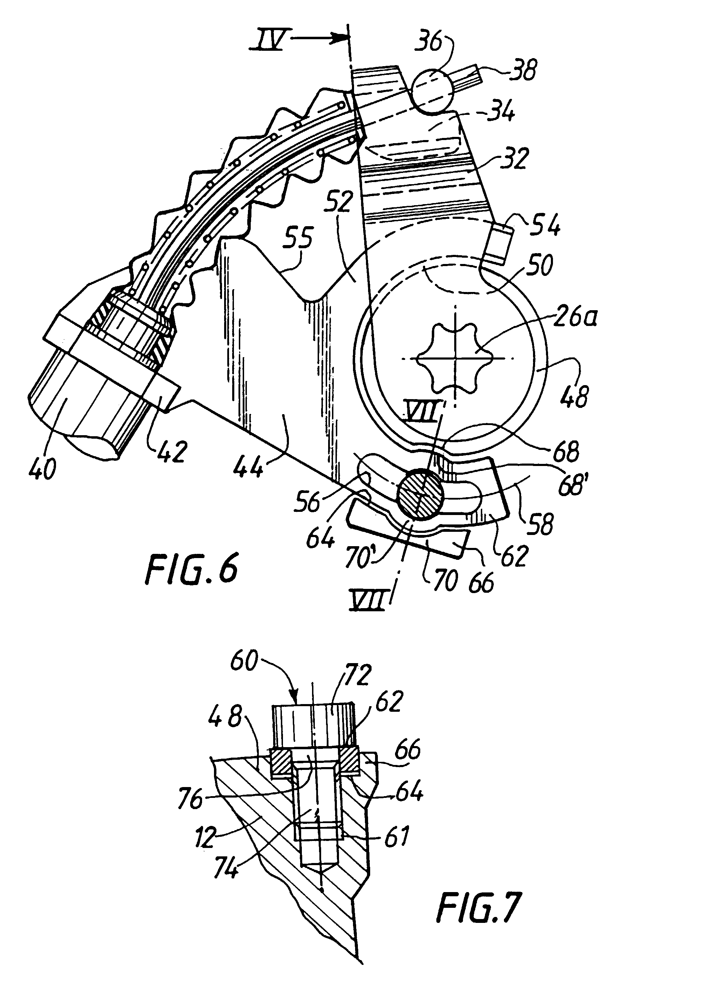

L'étrésillon 44 comporte une deuxième butée 55 pour le levier 32 lorsque ce dernier est dans la position d'actionnement extrême, représentée sur les Figures 3 et 5.

Enfin, l'étrésillon 44 est formé avec une lumière oblongue 56, s'étendant sensiblement selon un arc de cercle 58, concentrique à la découpe circulaire 50. L'arc de cercle 58 est donc centré sur l'axe X-X' de rotation du levier 32 lorsque l'étrésillon est en place sur l'étrier 12. La lumière oblongue 56 sert à l'immobilisation de l'étrésillon 44 sur l'étrier 12, par exemple au moyen d'une vis 60 traversant cette ouverture et vissée dans un alésage taraudé pratiqué dans la partie arrière 46 de l'étrier 12.

De la description qui précède, on aura compris comment l'invention est mise en oeuvre. A la fin de l'assemblage du frein à disque, lorsque tous les composants sont installés dans l'alésage 15, l'étrésillon 44 est mis en place autour du bossage cylindrique 48, et le levier 32 est solidarisé au pivot 26a, par exemple par emmanchement à force.

De façon avantageuse, le pivot 26a pourra avoir une forme non circulaire, en étoile comme on l'a représenté sur les Figures 2 et 3, ou encore polygonale ou muni de cannelures, coopérant avec une ouverture de forme complémentaire du levier 32, pour garantir l'entraînement en rotation sans jeu du plateau 26 par le levier 32.

On a vu plus haut que, après cet assemblage final, du fait des tolérances de fabrication, la position angulaire du levier 32 par rapport à l'étrier 12 est située dans une plage de valeurs relativement étendue. Il suffit alors de faire tourner l'étrésillon, qui à ce moment est libre en rotation, autour du bossage 48, pour amener la patte 54 en butée sur le levier 32, dans la position illustrée aux Figures 2 et 4, puis d'immobiliser l'étrésillon 44 dans cette position sur l'étrier 12 en serrant la vis 60.

Le frein à disque est alors réglé dès la fin de sa fabrication, et il est prêt à être installé sur un véhicule sans autre manipulation. En effet, la position de l'étrésillon 44 ayant été définie par la position au repos du levier 32, il s'ensuit que la position de la butée de gaine 42 est alors à une distance de la gorge d'accrochage 34 qui ne dépend que de la géométrie de l'étrésillon 44, et que cette distance est donc identique pour tous les freins à disque ainsi fabriqués.

On comprend donc que la course angulaire du levier 32, ou la course linéaire du câble 38, entre la position de repos illustrée à la Figure 2, et la position extrême illustrée à la Figure 3 où le levier 32 est en appui sur la butée 55, est indépendante de la position initiale du levier 32, et par conséquent des tolérances de fabrication.

Lors de l'installation du frein à disque sur un véhicule en cours de montage, après avoir monté l'étrier 12 sur le porte-fusée, le câble de manoeuvre 38 peut être relié au frein à disque. Pour ce faire, la gaine 40 est amenée en appui sur la butée de gaine 42, et le câble 38 est passé dans la gorge 34 pour y accrocher la virole 36.

Le frein à disque ayant été réglé ainsi qu'on vient de l'exposer, on est alors assuré que la virole 36 est à la distance voulue de la butée de gaine 42, et qu'elle pourra effectuer la totalité de la course d'actionnement prévue pour un tel frein à disque, entre la position de repos des Figures 2 et 4, et la position d'actionnement extrême des Figures 3 et 5, où le levier 32 est en appui sur la butée 55. Aucun réglage supplémentaire n'est donc nécessaire en chaîne de montage du véhicule.

Le débattement angulaire maximal du levier 32 est ainsi déterminé uniquement par la distance angulaire entre les deux butées 54 et 55, formées toutes deux sur l'étrésillon 44. De même, la distance angulaire au repos entre la virole 36 et l'extrémité de la gaine 40 du câble est déterminée uniquement par la géométrie de l'étrésillon 44 lorsqu'il est en appui, par la butée 54, sur le levier 32.

L'étrésillon permettant ces opérations peut être facilement réalisé par emboutissage d'une tôle, et il n'augmente donc pas de manière significative le prix de revient du frein à disque ainsi obtenu. De plus, il porte les butées 42, 54 et 55 et constitue ainsi une pièce de butée, qui peut être fabriquée en une seule opération. Les distances angulaires entre ces différentes butées peuvent donc être respectées avec une assez grande précision.

Il est ainsi clair que le débattement maximal du levier 32 sera assuré dans tous les cas, quelle que soit la position angulaire au repos du levier 32. Le réglage du dispositif d'actionnement mécanique tel que l'invention le prévoit n'a aucune influence sur ce débattement maximal. Il a pour seul effet de faire varier, dans une faible mesure, la boucle libre du câble entre la butée de gaine 42 et par exemple le levier de frein à main (non représenté) situé dans l'habitacle du véhicule.

On voit donc bien que les moyens de réglage prévus par l'invention sont particulièrement simples à mettre en oeuvre, puisqu'il suffit, lors de la fabrication du frein à disque, de mettre deux pièces en butée l'une sur l'autre, et de serrer une vis, puis d'installer ce frein sur un véhicule sans autre réglage.

Un autre avantage important procuré par l'invention est qu'il est possible de retrouver très facilement cette position de réglage initial, même après un démontage accidentel de la vis 60, par exemple par une personne non familiarisée avec ce type de frein.

Comme on le voit sur les Figures 6 et 7, la lumière oblongue 56 est formée dans un second bras 62 de l'étrésillon 44, reçu dans un gorge curviligne 64, s'étendant selon un arc de cercle centré sur l'axe X-X'. La gorge 64 est formée entre le bossage cylindrique 48 et une partie 66 du corps 10 faisant saillie axialement vers l'arrière de l'étrier 12.

L'alésage taraudé 61 destiné à coopérer avec la vis 60 est pratiqué dans le fond de cette gorge, sensiblement au milieu de l'arc de cercle qu'elle forme. La gorge 64 participe ainsi au guidage de l'étrésillon 44 lorsqu'on le fait tourner autour du bossage cylindrique 48 pour procéder à son réglage, comme on l'a expliqué plus haut.

De plus, une empreinte radiale concave 68 est formée dans la paroi de la gorge 64 formée par le bossage cylindrique 48, le centre de cette empreinte 68 étant situé sensiblement sur un rayon joignant l'axe X-X' à l'axe de l'alésage taraudé 61.

De même, une empreinte radiale concave 70 est formée dans la paroi de la gorge 64 formée par la partie en saillie 66 de l'étrier 12, le centre de cette empreinte 70 étant situé sensiblement sur un rayon joignant l'axe X-X' à l'axe de l'alésage taraudé 61, de sorte que les deux empreintes 68 et 70 se font face de chaque côté de l'axe du trou taraudé 61.

Enfin, la vis 60 comporte, entre sa tête de manoeuvre 72 et sa tige filetée 74, une partie intermédiaire 76, de longueur axiale sensiblement égale à l'épaisseur de l'étrésillon 44, et dont la section affecte une forme de came, dont le plus grand diamètre est supérieur à la largeur initiale de la lumière oblongue 56.

Lorsque l'on procède au réglage du frein ainsi qu'on l'a déjà exposé, une fois que la patte 54 est en appui sur le levier 32, le serrage de la vis 60 dans l'alésage 61 a tout d'abord pour effet d'assurer son maintien radial dans l'étrier 12.

Puis, lorsque l'on continue de serre la vis 60, la partie intermédiaire 76 est amenée au voisinage du bord de la lumière oblongue 56. La section en forme de came de la partie intermédiaire 76 déforme alors les parois de la lumière 56, déformation qui est répercutée dans la matière du bras 62, qui peut alors s'expanser dans les empreintes 68 et 70, en y formant des bosses 68' et 70' respectivement. L'étrésillon 44 est ainsi dans sa position optimale telle que définie plus haut.

Par contre, si la vis 60 se trouve enlevée à la suite d'une fausse manoeuvre, l'étrésillon 44 n'est plus maintenu et peut alors s'échapper. Il sera alors très facile de le remettre en place, et de plus dans sa position de réglage initial et optimal. En effet, on aura compris que la seule position angulaire possible de l'étrésillon 44 sur l'étrier 12 est celle dans laquelle les bosses 68' et 70' sont remises en place dans les empreintes 68 et 70.

Il suffira donc de remettre l'étrésillon 44 dans cette position, puis de resserrer la vis 60, ou même une autre vis dépourvue de partie intermédiaire 76 en forme de came, pour retrouver le frein à disque avec son réglage initial optimal.

Bien entendu, l'invention n'est pas limitée aux modes de réalisation qui ont été décrits, mais elle est susceptible au contraire de recevoir de nombreuses modifications qui apparaîtront à l'homme du métier, sans sortir du cadre des revendications annexées. c'est ainsi par exemple que l'on pourra prévoir d'omettre la partie en saillie 66 de l'étrier, c'est à dire d'omettre une des parois radiales de la gorge 64. Dans ce cas, la position angulaire de l'étrésillon 44, correspondant à son réglage initial, sera repérée par une seule bosse 68' coopérant avec la seule empreinte 68 formée sur le bossage cylindrique 48.

## Revendications

1. Frein disque, comportant au moins un piston (14) coulissant dans un étrier (12) lui-même coulissant sur un support fixe, le piston (14) pouvant être actionné par un sous-ensemble mécanique (22) comprenant deux plateaux (24,26) sensiblement parallèles, un premier plateau (26) étant susceptible d'être entraîné en rotation par un levier (32) autour d'un axe (X-X') perpendiculaire à sa surface, un second plateau (24) étant fixe en rotation et solidaire du piston (14), la face d'au moins un des plateaux (24,26) étant formée avec des gorges inclinées recevant des billes (28) pour transformer le mouvement de rotation du premier plateau (26) en un mouvement de translation axiale du second plateau (24), le levier (32) étant formé avec une partie d'accrochage (34) de l'extrémité (36) d'un câble d'actionnement (38) à gaine (40), la gaine (40) du câble (38) prenant appui sur une pièce de butée (42) de gaine (40) fixe par rapport à l'étrier (12), caractérisés en ce que la pièce de butée (42) de gaine (40) est formée sur un étrésillon (44) dont la position angulaire autour de l'axe (X-X') par rapport au levier (32) est déterminée par la position angulaire au repos du levier (32) par rapport à l'étrier (12), l'étrésillon (44) comportant un bras (52) formé avec une patte (54) s'étendant perpendiculairement au bras (52) et formant une première butée (54) sur laquelle le levier (32) vient en appui dans une première position, l'étrésillon (44) étant formé avec une lumière oblongue (56) dont le grand axe s'étend sensiblement selon un arc de cercle (58) centré sur l'axe de rotation (X-X') du levier (32), et étant immobilisé en rotation par rapport à l'étrier (12) au moyen d'une vis (60) traversant la lumière oblongue (56) de l'étrésillon (44) et coopérant avec un alésage taraudé pratiqué dans l'étrier (12).

2. Frein à disque selon la revendications 1, caractérisé en ce que l'étrésillon (44) est formé avec une seconde butée (55) sur laquelle le levier (32) vient en appui dans une seconde position.

3. Frein à disque selon la revendication 2, caractérisé en ce que la première position du levier (32) correspond à sa position de repos, et en ce que la seconde position du levier (32) correspond à sa position de débattement maximal.

4. Frein disque selon la revendication 1, caractérisé en ce que la lumière oblongue (56) est formée dans un second bras (62) de l'étrésillon (44), le second bras (62) étant reçu dans une gorge curviligne (64) s'étendant selon un arc de cercle centré sur l'axe de rotation (X-X') du levier (32), formée entre un bossage cylindrique (48) et une partie en saillie (66) de l'étrier (12).

5. Frein à disque selon la revendication 4, caractérisé en ce que au moins une empreinte radiale concave (68,70) est formée dans une des parois radiales de la gorge curviligne (64).

6. Frein à disque selon les revendications 1 et 5, caractérisé en ce que la gorge curviligne (64) comporte une empreinte radiale concave (68) dans la paroi formée par le bossage cylindrique (48) et une empreinte radiale concave (70) dans la paroi formée par la partie en saillie (66), les centres des empreintes radiales concaves (68,70) étant alignés sur un rayon joignant l'axe (X-X') de rotation du levier (32) et l'axe de l'alésage taraudé (61) coopérant avec la vis (60).

7. Frein à disque selon la revendication 6, caractérisé en ce que la vis (60) comporte, entre une tête de manoeuvre (72) et une tige filetée (74), une partie intermédiaire (76) dont la section affecte une forme de came dont le plus grand diamètre est supérieur à la largeur initiale de la lumière oblongue (56).

## Patentansprüche

1. Scheibenbremse mit wenigstens einem Kolben (14), der in einem Bremssattel (12) gleitet, der wiederum an einem feststehenden Träger gleitet, wobei der Kolben (14) von einer mechanischen Unterbaugruppe (22) betätigt werden kann, die zwei zueinander im wesentlichen parallele Platten (24, 26) enthält, wobei eine erste Platte (26) von einem Hebel (32) um eine zu ihrer Oberfläche senkrechte Achse (X-X') in Drehung versetzt werden kann, wobei eine zweite Platte (24) drehfest und fest mit dem Kolben (14) verbunden ist, wobei die Fläche von wenigstens einer der Platten (24, 26) mit geneigten Nuten versehen ist, welche Kugeln (28) aufnehmen, um die Drehbewegung der ersten Platte (26) in eine axiale Translationsbewegung der zweiten Platte (24) zu transformieren, wobei der Hebel (32) mit einem Abschnitt (34) zum Einhängen des Endes (36) eines Betätigungskabels (38) mit Mantel (40) ausgebildet ist, wobei der Mantel (40) des Kabels (38) an einem Anschlagteil (42) des Mantels (40) anliegt, das bezüglich des Bremssattels feststehend ist, dadurch gekennzeichnet, daß das Anschlagteil (42) des Mantels (40) an einer Strebe (44) ausgebildet ist, deren Winkelstellung um die Achse (X-X') bezüglich des Hebels (32) von der Winkelstellung des Hebels (32) bezüglich des Bremssattels (12) in der Ruhestellung bestimmt ist, wobei die Strebe (44) einen Arm (52) enthält, der mit einer Lasche (54) ausgebildet ist, die sich senkrecht zum Arm (52) erstreckt und einen ersten Anschlag (54) bildet, an welchem der Hebel (32) in einer ersten Stellung in Anlage gelangt, wobei die Strebe (44) mit einer länglichen Öffnung (56) ausgebildet ist, deren längere Achse sich im wesentlichen entlang einem Kreisbogen (58) erstreckt, der auf die Rotationsachse (X-X') des Hebels (32) zentriert ist und bezüglich des Bremssattels (12) mittels einer Schraube (60) drehfest gehalten ist, welche die längliche Öffnung (56) der Strebe (44) durchquert und mit einer in dem Bremssattel (12) ausgebildeten Gewindebohrung zusammenwirkt.

2. Scheibenbremse nach Anspruch 1, dadurch gekennzeichnet, daß die Strebe (44) mit einem zweiten Anschlag (55) ausgebildet ist, an welchem der Hebel (32) in einer zweiten Stellung in Anlage gelangt.

3. Scheibenbremse nach Anspruch 2, dadurch gekennzeichnet, daß die erste Stellung des Hebels (32) dessen Ruhestellung entspricht und daß die zweite Stellung des Hebels (32) dessen Stellung mit maximaler Auslenkung entspricht.

4. Scheibenbremse nach Anspruch 1, dadurch gekennzeichnet, daß die längliche Öffnung (56) in einem zweiten Arm (62) der Strebe (44) gebildet ist, wobei der zweite Arm (62) in einer gekrümmten Nut (64) aufgenommen ist, die sich entlang einem auf die Rotationsachse (X-X') des Hebels (32) zentrierten Kreisbogen erstreckt und zwischen einem zylindrischen Vorsprung (48) und einem hervorstehenden Abschnitt (66) des Bremssattels (12) ausgebildet ist.

5. Scheibenbremse nach Anspruch 4, dadurch gekennzeichnet, daß in einer der radialen Wände der gekrümmten Nut (64) wenigstens eine konkave radiale Vertiefung (68, 70) gebildet ist.

6. Scheibenbremse nach den Ansprüchen 1 und 5, dadurch gekennzeichnet, daß die gekrümmte Nut (64) eine konkave radiale Vertiefung (68) in der Wand enthält, die von dem zylindrischen Vorsprung (48) gebildet ist, und eine konkave radiale Vertiefung (70) in der Wand, die von dem hervorstehenden Abschnitt (66) gebildet ist, wobei die Mitten der konkaven radialen Vertiefungen (68, 70) auf einen Radius ausgerichtet sind, der die Drehachse (X-X') des Hebels (32) und die Achse der mit der Schraube (60) zusammenwirkenden Geweindebohrung (61) miteinander verbindet.

7. Scheibenbremse nach Anspruch 6, dadurch gekennzeichnet, daß die Schraube (60) zwischen einem Betätigungskopf (72) und einem mit einem Außengewinde versehenen Schaft (74) einen Zwischenabschnitt (76) enthält, dessen Querschnitt die Form eines Nockens hat, dessen größter Durchmesser größer als die anfängliche Breite der länglichen Öffnung (56) ist.

## Claims

1. Disk brake including at least one piston (14) sliding in a caliper (12) itself sliding over a stationary support, it being possible for the piston (14) to be actuated by a mechanical subassembly (22) comprising two substantially parallel plates (24, 26), a first plate (26) being able to be driven in rotation by a lever (32) about an axis (X-X') perpendicular to its surface, a second plate (24) being stationary in terms of rotation and secured to the piston (14), the face of at least one of the plates (24, 26) being formed with inclined grooves taking balls (28) for converting the rotational movement of the first plate (26) into an axial translational movement of the second plate (24), the lever (32) being formed with a part (34) for fastening onto the end (36) of a sheathed (40) actuating cable (38), the sheath (40) of the cable (38) bearing on a sheath (40) end stop piece (42) which is stationary with respect to the caliper (12), characterized in that the sheath (40) end stop piece (42) is formed on a bracing piece (44), of which the angular position about the axis (X-X') with respect to the lever (32) is determined by the angular position at rest of the lever (32) with respect to the caliper (12), the bracing piece (44) including an arm (52) formed with a tab (54) extending perpendicularly to the arm (52) and forming a first limit stop (54) against which the lever (32) comes to bear in a first position, the bracing piece (44) being formed with an oblong slot (56), the long axis of which extends substantially in an arc of a circle (58) centered on the axis of rotation (X-X') of the lever (32), and being immobilized in terms of rotation with respect to the caliper (12) by means of a screw (60) passing through the oblong slot (56) of the bracing piece (44) and interacting with a tapped bore made in the caliper (12).

2. Disk brake according to claim 1, characterized in that the bracing piece (44) is formed with a second limit stop (55) against which the lever (32) comes to bear in a second position.

3. Disk brake according to Claim 2, characterized in that the first position of the lever (32) corresponds to its position of rest, and in that the second position of the lever (32) corresponds to its position of maximum excursion.

4. Disk brake according to Claim 1, characterized in that the oblong slot (56) is formed in a second arm (62) of the bracing piece (44), the second arm (62) being accommodated in a curved groove (64) extending along an arc of a circle centered on the axis of rotation (X-X') of the lever (32), said groove (64) being formed between a cylindrical boss (48) and a projecting part (66) of the caliper (12).

5. Disk brake according to Claim 4, characterized in that at least one concave radial depression (68, 70) is formed in one of the radial walls of the curved groove (64).

6. Disk brake according to Claims 1 and 5, characterized in that the curved groove (64) includes a concave radial depression (68) in the wall formed by the cylindrical boss (48) and a concave radial depression (70) in the wall formed by the projecting part (66), the centers of the concave radial depressions (68, 70) being aligned on a radius joining the axis (X-X') of rotation of the lever (32) and the axis of the tapped bore (61) interacting with the screw (60).

7. Disk brake according to Claim 6, characterized in that the screw (60) includes, between an operating head (72) and a threaded shank (74), an intermediate part (76), the cross-section of which adopts a cam shape of which the largest diameter is greater than the initial width of the oblong slot (56).
